# EUROPEAN PATENT APPLICATION

(11) **EP 4 648 525 A1**
(43) Date of publication of application: **12.11.2025**
(21) Application number: 24756091.5
(22) Date of filing: 05.02.2024
(51) Int. Cl.: H04W 72/25

(54) **RESOURCE SELECTION METHOD AND APPARATUS, AND DEVICE**

(30) Priority: 16.02.2023 CN 202310127362
(71) Applicant: CICT Connected and Intelligent Technologies Co., Ltd., Chongqing 400041 (CN)
(72) Inventor: XI, Yifan, Chongqing 400041 (CN); ZHAO, Rui, Chongqing 400041 (CN); HU, Jinling, Chongqing 400041 (CN); CHEN, Shanzhi, Chongqing 400041 (CN)
(74) Representative: Murgitroyd & Company
(86) International application number: PCT/CN2024/075921
(87) International publication number: WO 2024/169717

(57) **Abstract**

The present application relates to the technical field of communications, and provides a resource selection method and apparatus, and a device. The method comprises: determining a first candidate resource set for beam scanning; selecting a first transmission resource in the first candidate resource set; and sending a beam scanning channel to a second device on the first transmission resource.

## Description

### CROSS-REFERENCE TO RELATED APPLICATIONS

The present application claims priority to Chinese Patent Application No. 202310127362.6, filed in China on February 16, 2023, which is incorporated herein by reference in its entirety.

### TECHNICAL FIELD

The present application relates to the field of communications technologies, and in particular, to a resource selection method and apparatus, and a device.

### BACKGROUND

Currently, vehicle-to-everything (Vehicle-to-Everything, C-V2X) is mainly deployed on a sub-6G frequency band (FR1 frequency band). However, with development of C-V2X, the sub-6G frequency band will hardly meet requirements of future vehicle-to-everything for ultra-large throughput, an ultra-low latency, ultra-high reliability, and the like.

A 30-300 GHz millimeter wave frequency band (FR2 frequency band) may improve system performance by several orders of magnitude, and has huge application potential for vehicle-to-everything. A vehicle-to-everything millimeter wave communications technology may resolve a conflict between limited spectrum resources of the sub-6G frequency band and massive data required for future autonomous driving. In addition, because a wavelength of a millimeter wave is extremely short, a plurality of antennas may be integrated on one antenna array to generate narrow directional beams, so as to compensate for serious millimeter wave propagation loss. In addition, due to directional transmission and narrow beams, Doppler spread may be efficiently managed at millimeter wave frequencies, and may also be effectively resolved even in high mobility environments. Therefore, a millimeter wave frequency band can significantly improve vehicle communication performance.

In beam-based millimeter wave communication, a dimension of a beam is added to original two-dimensional time-frequency space for sensing of a wireless channel, thereby posing new challenges for channel sensing and determining of resource availability in distributed channel access of vehicle-to-everything. In addition, applications of a multiple-in multiple-out (multiple-in multiple-out, MIMO) technology and a beamforming technology in vehicle-to-everything need to be considered.

However, the 3rd generation partnership project (Third Generation Partnership Projects, 3GPP) has not carried out standardization for sidelink millimeter wave communication, and a related technology has not yet supported a sidelink millimeter wave communications technology.

### SUMMARY

The present application provides a resource selection method and apparatus, and a device, which resolve a problem that a related technology has not yet supported a sidelink millimeter wave communications technology.

According to a first aspect, an embodiment of the present application provides a resource selection method, applied to a first device, including:
determining a first candidate resource set used for beam sweeping;
selecting a first transmission resource from the first candidate resource set; and
transmitting a beam sweeping channel to a second device on the first transmission resource.

According to a second aspect, an embodiment of the present application provides a resource selection method, applied to a second device, including:
receiving a beam sweeping channel transmitted by a first device;
performing beam power measurement according to the beam sweeping channel, to obtain a beam report; and
transmitting the beam report to the first device.

According to a third aspect, an embodiment of the present application provides a resource selection apparatus, applied to a first device, including:
a first processing module, configured to determine a first candidate resource set used for beam sweeping;
a second processing module, configured to select a first transmission resource from the first candidate resource set; and
a first transmitting module, configured to transmit a beam sweeping channel to a second device on the first transmission resource.

According to a fourth aspect, an embodiment of the present application provides a resource selection apparatus, applied to a second device, including:
a first receiving module, configured to receive a beam sweeping channel transmitted by a first device;
a third processing module, configured to perform beam power measurement according to the beam sweeping channel, to obtain a beam report; and
a second transmitting module, configured to transmit the beam report to the first device.

According to a fifth aspect, an embodiment of the present application provides a device, including a transceiver, a memory, a processor, and a computer program stored in the memory and runnable on the processor, where when the processor executes the computer program, the resource selection method according to the first aspect is implemented, or the resource selection method according to the second aspect is implemented.

According to a sixth aspect, an embodiment of the present application provides a computer-readable storage medium storing a computer program, where when the computer program is executed by a processor, the resource selection method according to the first aspect is implemented, or the resource selection method according to the second aspect is implemented.

Beneficial effects of the foregoing technical solutions in the present application are as follows:
In embodiments of the present application, a first device may determine a first candidate resource set used for beam sweeping, select a first transmission resource from the first candidate resource set, and transmit a beam sweeping channel to a second device on the first transmission resource, to execute a beam sweeping process. In this way, fast beam sweeping and alignment on a sidelink can be implemented.

### BRIEF DESCRIPTION OF THE DRAWINGS

FIG. 1 is a sequence diagram of NR-V2X mode 2 resource selection in a related technology.
FIG. 2 is a flowchart of a resource selection method according to an embodiment of the present application.
FIG. 3 is a schematic diagram of transmission and scheduling of a beam sweeping channel and a first channel according to an embodiment of the present application.
FIG. 4 is a schematic diagram of transmission and scheduling of a beam sweeping channel and a first channel according to another embodiment of the present application.
FIG. 5 is a schematic diagram 1 of a beam direction according to an embodiment of the present application.
FIG. 6 is a schematic diagram 1 of excluding a first resource from a second resource candidate set according to an embodiment of the present application.
FIG. 7 is a schematic diagram 2 of a beam direction according to an embodiment of the present application.
FIG. 8 is a schematic diagram 2 of excluding a first resource from a second resource candidate set according to an embodiment of the present application.
FIG. 9 is a schematic diagram 3 of a beam direction according to an embodiment of the present application.
FIG. 10 is a schematic diagram 3 of excluding a first resource from a second resource candidate set according to an embodiment of the present application.
FIG. 11 is a schematic diagram 1 of a definition of a reverse beam and a possible conflict according to an embodiment of the present application.
FIG. 12 is a schematic diagram 2 of a definition of a reverse beam and a possible conflict according to an embodiment of the present application.
FIG. 13 is a schematic diagram 4 of a beam direction according to an embodiment of the present application.
FIG. 14 is a schematic diagram 4 of excluding a first resource from a second resource candidate set according to an embodiment of the present application.
FIG. 15A is a schematic structural diagram 1 of a beam sweeping channel according to an embodiment of the present application.
FIG. 15B is a schematic structural diagram 2 of a beam sweeping channel according to an embodiment of the present application.
FIG. 16A is a schematic structural diagram 1 of multiplexing of a beam sweeping channel according to an embodiment of the present application.
FIG. 16B is a schematic structural diagram 2 of multiplexing of a beam sweeping channel according to an embodiment of the present application.
FIG. 17 is a flowchart of a resource selection method according to another embodiment of the present application.
FIG. 18 is a structural block diagram of a resource selection apparatus according to an embodiment of the present application.
FIG. 19 is a structural block diagram of a resource selection apparatus according to another embodiment of the present application.
FIG. 20 is a structural block diagram of a device according to an embodiment of the present application.

### DETAILED DESCRIPTION OF THE EMBODIMENTS

To make the technical problems to be solved, technical solutions, and advantages of the present application clearer, the following describes the present application in detail with reference to the accompanying drawings and specific embodiments. In the following descriptions, specific details such as specific configurations and components are provided only to help fully understand embodiments of the present application. Therefore, a person skilled in the art should understand that various changes and modifications may be made to embodiments described herein without departing from the scope and spirit of the present application. In addition, for clarity and simplicity, descriptions of known functions and constructions are omitted.

It should be understood that, "one embodiment" or "an embodiment" throughout this specification means that specific features, structures or characteristics related to embodiments may be included in at least one embodiment of the present application. Therefore, descriptions of "in one embodiment" or "in an embodiment" in various places throughout this specification are not necessarily referring to a same embodiment. In addition, the specific features, structures, or characteristics may be combined in one or more embodiments in any appropriate manner.

In embodiments of the present application, it should be understood that, sequence numbers of the foregoing processes do not mean execution sequences. The execution sequences of the processes should be determined based on functions and internal logic of the processes, and should not be construed as any limitation on the implementation processes of embodiments of the present application.

In addition, terms "system" and "network" in this specification may often be used interchangeably.

In embodiments of the present application, it should be understood that, "B that corresponds to A" means that B is associated with A, and B may be determined based on A. However, it should be further understood that determining B based on A does not mean that B is determined based on only A. B may alternatively be determined based on A and/or other information.

In embodiments of the present application, a form of an access network is not limited, and may be an access network including a macro base station (Macro Base Station), a pico base station (Pico Base Station), a NodeB (name of a 3G mobile base station), an enhanced base station (eNB), a home enhanced base station (Femto eNB or Home eNode B or Home eNB or HeNB), a relay station, an access point, a remote radio unit (Remote Radio Unit, RRU), a remote radio head (Remote Radio Head, RRH), or the like. A user terminal may be a mobile phone (or a smart phone), or another device that can transmit or receive a wireless signal, including a user equipment, a personal digital assistant (Personal Digital Assistant, PDA), a wireless modem, a wireless communications apparatus, a handheld apparatus, a laptop computer, a cordless phone, a wireless local loop (Wireless Local Loop, WLL) station, a customer-premises equipment (Customer Premise Equipment, CPE) or a mobile smart hotspot that can convert a mobile signal into a Wi-Fi signal, a smart home appliance, or a device that can communicate with a mobile communications network spontaneously without manual operations.

The following describes an NR-V2X resource selection technology and an NR-V2X beam sweeping technology in a related technology.

### 1. Resource selection procedure

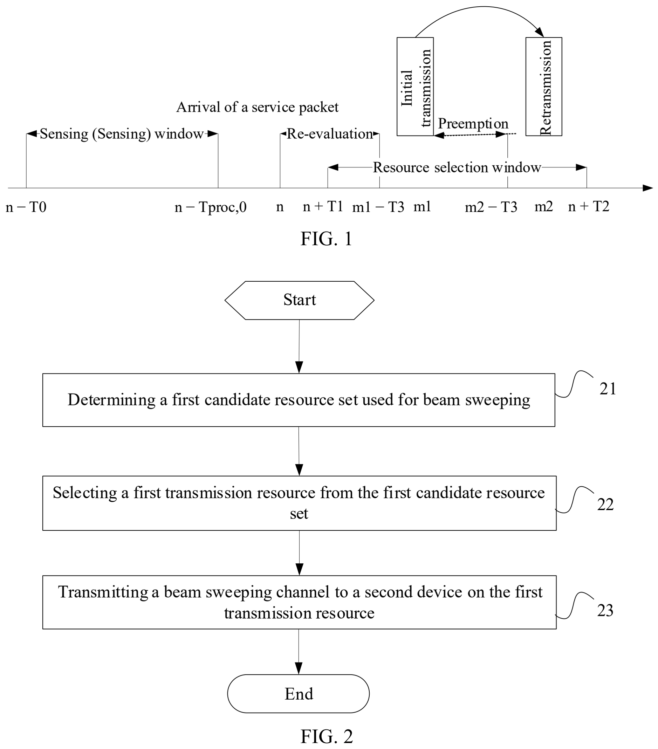

In new radio (New Radio, NR)-V2X, a resource exclusion technology based on sensing and reference signal received power (Reference signal receiving power, RSRP) is used. As shown in FIG. 1, in a sensing (Sensing) window, a user equipment (User Equipment, UE) constantly performs receiving decoding and measures RSRP. After a service packet arrives at an instant n, higher-layer signalling triggers a resource selection process of the UE, which is as follows:
(1) A candidate single-slot (slot) resource R_{x,y} is successive x+j sub-channels in ty slots within a time [n+T₁, n+T₂], as shown in FIG. 1, where 0 ≤ T1 ≤ T_{proc,1}, T_{proc,1} indicates a transmission processing latency (including a sensing-based resource selection time and a transmission preparation time of a PSCCH) of the UE, and a value may be {3,5,9,17} physical slots, which respectively correspond to {15,30,60,120} kHz SCSs, T₂ₘᵢₙ ≤ T₂ ≤ remaining PDB, T₂ₘᵢₙ is a minimum value of T₂ configured by using a higher-layer parameter t2min_SelectionWindow, and the remaining PDB is a remaining delay budget of a data packet. A total quantity of candidate single-slot resources is Mₜₒₜₐₗ.
(2) The UE constantly monitors slots within a sensing window [n - T₀, n - T_{proc,0}), to perform physical sidelink control channel (Physical sidelink control channel, PSCCH) decoding, PSSCH decoding, and PSSCH or PSCCH-RSRP measurement, where T₀ is a length of the sensing window configured by a higher layer, T_{proc,0} is a time during which the UE processes a previous sensing result, and a value may be {1,1,2,4} physical slot(s), which respectively correspond(s) to {15,30,60,120} kHz SCSs.
(3) Th(pᵢ, pⱼ) indicates an i^{th} RSRP field in sl-ThresSL-PRS-RSRP-List-r16, where i = pᵢ + (pⱼ - 1)*8, pᵢ indicates a priority indicated by received SCI, and pⱼ indicates a priority of transmission performed by the UE, where pⱼ = prio_{TX}.
(4) An initialized S_{A} is a set of all candidate single-slot resources.
(5) Candidate slots corresponding to skip slots are excluded, where the skip slots are slots (for example, y) in which sensing cannot be performed due to half-duplex. For all periods (such as 20 ms, 50 ms, and 100 ms) configured by a system, all candidates slots (that is, slots that are in y, y + 20*2^{µ}, y + 40*2^{µ}, y + 50*2^{µ}, y + 60*2^{µ}, y + 80*2^{µ}, y + 100*2^{µ}, ... and that fall within a selection window) in corresponding subsequent positions are excluded.
(6) Candidate single-slot resources that meet the following two conditions are excluded.
   1) An RSRP measurement value indicated by received SCI is higher than Th(prio_{RX}, prio_{TX}).
   2) A reserved resource indicated by the received SCI partially or completely overlaps with a TB transmitted on a candidate resource y or a TB transmitted on a candidate resource in subsequent y + x*Pₛₜₑₚ*2^{µ}, where Pₛₜₑₚ is a resource reservation period (converted into a logical slot), x is an integer, which represents a quantity of subsequent periods, and µ is uniquely determined by a subcarrier spacing (Sub Carrier Spacing, SCS) of a resource pool.
(7) If a quantity of remaining resources in S_{A} is less than X*Mtotal, Th(pᵢ, pⱼ) is increased by 3 dB and step (4) is performed again. For a given prio_{TX}, X is configured by using a higher-layer parameter sl-xPercentage(prio_{TX}).
(8) The UE reports S_{A} to the higher layer.
(9) When a HARQ RTT is met, the higher layer randomly selects, from S_{A}, an initial transmission resource and a retransmission resource for a current TB.

On this basis, a re-evaluation (Re-evaluation) mechanism and a preemption (Pre-emption) mechanism are added to resolve resource collisions caused by aperiodic burst services and ensure reliability of high-priority services. The re-evaluation mechanism is mainly for a resource that is not reserved. Before this resource is transmitted, it is determined, based on a latest sensing result, whether this resource collides with a selected resource. If this resource collides with the selected resource, re-selection may be performed, to reduce a resource collision probability. The preemption mechanism is mainly for a resource that has been reserved. If it is found that the resource reserved is preempted by a high-priority UE, a low-priority UE is triggered to perform resource re-selection, thereby avoiding a collision between a high priority service and a low priority service and ensuring performance of the high-priority service.

### 2. Beam sweeping

Beam alignment requires that a transmit end and a receive end perform searching and sweeping in a beam direction, to detect a beam direction angle when maximum power is obtained. The transmit end allocates a specific slot to each angle, to ensure that signals of all angles can be received, and the receive end receives signals of different beam angles from the transmit end within a specific time period.

In an idle mode, a synchronization-based signal SSB is measured, and in a connected mode, a channel state information (Channel State Information, CSI)-reference signal (Reference Signal, RS) on a downlink (downlink, DL) and a sounding reference signal (Sounding Reference Signal, SRS) on an uplink (uplink, UL) are measured. SSB-based beam measurement is used as an example. One SSB includes a primary synchronization signal (Primary Synchronization Signal, PSS), a secondary synchronization signal (Secondary Synchronization Signal, SSS), and a physical broadcast channel (Physical Broadcast Channel, PBCH). A synchronization signal (Synchronization Signal, SS) burst includes successive SSBs. When beam sweeping and alignment is executed, each SSB may be mapped to a pre-defined angular direction, thereby implementing beam sweeping. A gNB periodically sweeps different pre-defined directions (beams) of a to-be-transmitted SSB. The SSB covers only one pre-defined direction within an SS burst interval and another pre-defined direction within a next SS burst interval.

The related technology mainly has the following technical problems.

In the related technology, long-term evolution (Long Term Evolution, LTE) or NR-V2X of a vehicle-to-everything communications technology is omni-directional communication. However, V2X communication in an FR2 frequency band needs to be based on beamforming, and a solution needs to be provided to implement a beamforming technology in sidelink communication. In addition, the related technology is not applicable to an environment in which a vehicle moves at a high speed. When a relative position of the vehicle constantly changes, quick beam alignment cannot be implemented and a millimeter wave communications link cannot be established by using the related technology. Therefore, a solution for fast beam sweeping and alignment in V2X communication needs to be provided.

Currently, research on sidelink millimeter wave communication has not been started, there is no related solution of allocating time domain resources, frequency domain resources, and beam domain resources, and a beam resource allocation technology in a related technology of cellular communication is not directly applicable to a sidelink. A main reason is that in a mode 2 of a sidelink, no base station participates in scheduling, and a UE transmits a resource through resource sensing of a sidelink. In the future, if sidelink positioning is supported, a method for selecting a time domain resource, a frequency domain resource, or a beam domain resource in an FR2 needs to be determined based on technical characteristics of a sidelink.

Specifically, embodiments of the present application provide a resource selection method and apparatus, and a device, to resolve the problem that the related technology does not support a sidelink millimeter wave communications technology.

### First embodiment

As shown in FIG. 2, an embodiment of the present application provides a resource selection method, which is applied to a first device and specifically includes the following steps 21 to 23.

In step 21, a first candidate resource set used for beam sweeping is determined.

Herein, the first candidate resource set used for beam sweeping may be selected from a resource pool according to configuration information of the resource pool.

In step 22, a first transmission resource is selected from the first candidate resource set.

In this step, the first transmission resource is selected from the first candidate resource set to determine a resource used to transmit a beam sweeping channel. Herein, the beam sweeping channel is a channel used for beam sweeping.

It should be noted that the beam sweeping channel may be a new channel, or may be a channel in a related technology (for example, may be a sidelink-synchronization signal block (Sidelink-Synchronization Signal Block, S-SSB)). The first device may execute a beam sweeping process by using the beam sweeping channel.

In step 23, the beam sweeping channel is transmitted to a second device on the first transmission resource.

It should be noted that, in consideration of a limitation of half-duplex and to support a process in which beam sweeping is performed on a plurality of beams of the second device, the beam sweeping channel may need to be repeatedly transmitted. Therefore, the first candidate resource set needs to include a plurality of time-frequency resources, to support repeated transmission of beam sweeping channels of a same beam or different beams.

In this embodiment, a first device may determine a first candidate resource set used for beam sweeping, select a first transmission resource from the first candidate resource set, and then transmit a beam sweeping channel to a second device on the first transmission resource, to execute a beam sweeping process. In this way, fast beam sweeping and alignment on a sidelink can be implemented.

Optionally, the method further includes:
receiving a beam report transmitted by the second device according to the beam sweeping channel.

The beam report includes a beam index and/or a beam power measurement result.

Herein, the second device may perform beam power measurement according to the beam sweeping channel transmitted by the first device, and feed back the beam index and/or the beam power measurement result to the first device.

In this way, based on the received beam sweeping feedback result transmitted by the second device, the first device may establish a millimeter wave communications link with the second device, thereby implementing sidelink millimeter wave communication. In this way, in an environment in which a vehicle moves at a high speed, when a relative position of the vehicle constantly changes, a millimeter wave communications link may be quickly established by using the resource selection method in this embodiment of the present application.

Optionally, a time difference between a first instant at which the first device transmits the beam sweeping channel and a second instant is less than or equal to a first time interval, and the second instant is an instant at which the first device receives the beam report transmitted by the second device.

It should be noted that a function of the first time interval is to ensure validity of the beam report fed back by the second device.

Optionally, the process of selecting the first transmission resource from the first candidate resource set includes at least one of the following:
(1) performing resource exclusion on an omni-directional resource sensing result of control signalling on the beam sweeping channel, to obtain a resource exclusion result, and selecting the first transmission resource from the first candidate resource set according to the resource exclusion result;
(2) randomly selecting a resource from the first candidate resource set as the first transmission resource; or
(3) selecting the first transmission resource from the first candidate resource set according to configuration information and/or indication information transmitted by a network.

In this embodiment, a resource allocation process of selecting the first transmission resource from the first candidate resource set may be based on sensing, or may be based on configuration. A sensing-based resource allocation process may include: performing the resource exclusion on the omni-directional resource sensing result of the control signalling on the beam sweeping channel in the first candidate resource set, to select a transmission resource (that is, the first transmission resource) for the beam sweeping channel. A configuration-based resource allocation process may include: configuring or pre-configuring a time-frequency domain pattern (pattern) structure for the first candidate resource set by using a higher layer, and performing, by the first device, resource selection according to the configuration information and/or the indication information transmitted by the network and based on an index (index) in the configuration information and/or the indication information. It may be understood that a resource may be randomly selected from the first candidate resource set as the first transmission resource.

Optionally, the method further includes: determining a second candidate resource set used to transmit data; and selecting, from the second candidate resource set, a second transmission resource for a first channel used to transmit data.

Herein, the first device may determine, based on the configuration information of the resource pool, the second candidate resource set used to transmit data from the resource pool.

It should be noted that the first channel is used to transmit data, for example, transmit FR2 data information in a specific beam direction. That is, the second candidate resource herein is used to transmit the first channel. It should be further noted that the second candidate resource may alternatively be used to transmit a control channel.

A manner of selecting, from the second candidate resource set, the second transmission resource for the first channel includes at least one of the following manner 1 and manner 2.

Manner 1: the second transmission resource is selected for the first channel from the second candidate resource set according to an association relationship between the beam sweeping channel and the first channel.

It should be noted that the beam sweeping channel includes at least control signalling and/or a reference signal RS. The control signalling may include data transmission scheduling information, and the data transmission scheduling information herein may be used to schedule transmission of the first channel.

That is, the second transmission resource may be indicated according to the data transmission scheduling information, and may be used to indicate the association relationship between the beam sweeping channel and the first channel.

Manner 2: according to information about a first beam direction corresponding to the second device, the second transmission resource is selected for the first channel from resources obtained after a first resource is excluded from the second candidate resource set.

In a specific embodiment, the association relationship between the beam sweeping channel and the first channel includes at least one of the following relationships (1) to (4).
(1) there is a mapping relationship between the beam sweeping channel and the first channel in frequency domain.

That is, in frequency domain, there is a specific association relationship between the first channel and the beam sweeping channel in mapping. For example, the first channel and the beam sweeping channel have a same frequency domain position, or there is a fixed (or optional) offset (offset) between the first channel and the beam sweeping channel.

(2) The beam sweeping channel and the first channel meet a second time interval in time domain.

That is, there is a gap (the second time interval) in time domain between the beam sweeping channel and the first channel. The second device measures the received beam sweeping channel within the second time interval and feeds back the beam report to the first device. The first device may determine, based on duration of the gap, a time domain resource position of the first channel. Herein, the duration of the second time interval is configured or pre-configured by using a higher-layer parameter, or depends on an implementation of a UE.

It should be noted that a quantity of time domain slots in the gap (second time interval) needs to meet a specific constraint, for example, the quantity is located in [M, N], or only one or more specific values of M may be supported, where M and N are integers.

A relative start position of the gap is a time T_0 at which the first device transmits the beam sweeping channel. Therefore, a time point T = T_0 + Gap may be determined. A transmission resource after the time point T is selected from the second candidate resource set as the second transmission resource, and is used to transmit the first channel. Specifically, the process of performing, by the first device in the second candidate resource set, resource selection for data transmission may be performed as follows. The first device waits for duration of one gap after the beam sweeping process; after receiving the beam report fed back by the second device, the first device performs resource selection again in the second candidate resource set. That is, the first device selects, from the second candidate resource set, the second transmission resource for the first channel used to transmit data.

(3) A quantity of physical resource blocks (physical resource block, PRB) or sub-channels occupied by the first channel in frequency domain is indicated by the beam sweeping channel, or is configured or pre-configured by using a higher-layer parameter.

(4) The first channel is transmitted after the transmission of the beam sweeping channel is completed.

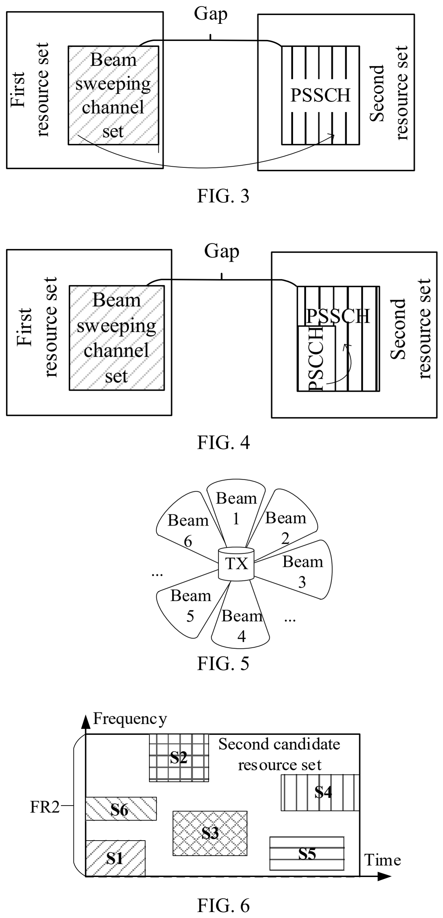

With reference to FIG. 3 and FIG. 4, the transmission of the beam sweeping channel and the first channel and scheduling of the first channel are described herein.

In an optional implementation, the first device performs, in the first candidate resource set, resource selection for the beam sweeping channel, and the beam sweeping channel may indicate, by using the data transmission scheduling information, the first channel transmitted in the second candidate resource set.

As shown in FIG. 3, there is a gap in time domain between the beam sweeping channel and the first channel that is indicated by the beam sweeping channel for transmission. The gap is used in a process in which the second device performs beam measurement and feeds back the beam report to the first device. That is, the second device measures the received beam sweeping channel within the duration of the gap, and feeds back the beam report to the first device.

A quantity of time domain symbols, a position of a time domain start symbol, the quantity of the PRBs or sub-channels occupied in frequency domain, and start positions of the PRBs or sub-channels in frequency domain that are of the first channel may be explicitly or implicitly indicated by the data transmission scheduling information on the beam sweeping channel.

In this way, when performing resource selection, the first device only needs to perform resource selection on a resource of the beam sweeping channel in the first candidate resource set, and resource allocation information that is used for data transmission and that is in the second candidate resource set may be indicated by the data transmission scheduling information on the beam sweeping channel.

In another optional implementation, the first device performs resource selection for the beam sweeping channel in the first candidate resource set, and performs resource selection for the first channel in the second candidate resource set.

As shown in FIG. 4, there is a gap in time domain between the beam sweeping channel and the first channel that is indicated by the beam sweeping channel for transmission. The gap is used in a process in which the second device performs beam measurement and feeds back the beam report to the first device.

In this embodiment, when performing resource selection, the first device needs to separately perform resource selection on a transmission resource of the beam sweeping channel in the first candidate resource set and a resource for data transmission in the second candidate resource set.

In an optional embodiment, a manner of determining the first beam direction includes at least one of the following manner 1 and manner 2.

Manner 1: a beam direction is acquired according to prior position information between the first device and the second device, and the beam direction is used as the first beam direction.

In this manner, the first beam direction may be a sector beam direction acquired according to the prior position information between the first device and the second device.

A manner of acquiring the prior position information includes at least one of the following:
acquiring from information interaction corresponding to sidelink SL communication;
acquiring from information interaction corresponding to Uu communication;
acquiring from a sensor, where the sensor may be a camera, a LiDAR device, a millimeter wave radar, a high-definition map, a pressure sensor, a motion sensor, or the like;
acquiring through wireless short-range positioning, where the wireless short-range positioning may be wireless local area network (Wireless Local Area Networks, WLAN) positioning, ultra-wideband (Ultra Wide Band, UWB) positioning, Bluetooth positioning, or the like;
acquiring through inertial navigation positioning; or
acquiring through radio access technology (radio access technology, RAT)-independent (independent) positioning.

Manner 2: at least one target beam direction is determined based on a beam report fed back by the second device, and one of the at least one target beam direction is selected as the first beam direction.

In this manner, the first device may select, according to beam information (including the at least one target beam direction) obtained from the received beam report fed back by the second device, a target beam direction as the first beam direction. For example, a target beam direction of best quality may be selected as the first beam direction, or one target beam direction may be randomly selected from received beams as the first beam direction.

In an optional embodiment, a beam domain needs to be monitored and resource exclusion (excluding the first resource from the second candidate resource set) needs to be performed, to select the second transmission resource for the first channel. Specifically, RSRP measurement of the first channel or the control channel may be executed according to the first beam direction, an adjacent beam direction of the first beam direction, and a reverse beam direction of the first beam direction, and resource exclusion is performed according to a corresponding rule. That is, the first resource is excluded to obtain the second candidate resource set not including the first resource.

In a specific embodiment, the first resource includes at least one of the following resources (1) to (3).
(1) A resource corresponding to the first beam direction in which a reference signal received power RSRP measurement value is higher than a first threshold value.

That is, when the RSRP measurement value in the first beam direction is greater than the first threshold value, a resource corresponding to the first beam direction is excluded.

(2) A resource corresponding to a second beam direction in which an RSRP measurement value is higher than a second threshold value, where the second beam direction includes at least a proximity beam direction of the first beam direction.

That is, when the RSRP measurement value in the second beam direction is higher than the second threshold value (for example, +*α*), a resource (that is, a resource occupied by a beam in the second beam direction) corresponding to the second beam direction is excluded.

(3) A resource corresponding to a third beam direction in which an RSRP measurement value is higher than a third threshold value, where the third beam direction includes at least a reverse beam direction of the first beam direction.

That is, when the RSRP measurement value in the third beam direction is higher than the third threshold value (for example, +*β*), a resource corresponding to the third beam direction is excluded.

It should be noted that the first threshold value, the second threshold value, and the third threshold value may be configured or pre-configured by using a higher-layer parameter.

The following describes the solution provided in embodiments of the present application by using specific examples.

### Example 1

As shown in FIG. 5 to FIG. 8, the first device may acquire sector beam information according to the prior position information; or after receiving the beam report fed back by the second device, the first device may separately perform resource sensing on the first beam direction, the second beam direction (that is, a neighboring direction of a first beam), and the third beam direction (including a reverse direction of the first beam) according to the beam report, to perform resource selection in the second candidate resource set of the resource pool in the FR2, thereby determining a resource (that is, the second transmission resource) used to transmit the first channel in the FR2.

Exemplarily, as shown in FIG. 5 and FIG. 6, FIG. 6 shows an occupied resource (Si) that is sensed in each beam direction in FIG. 5.

It should be noted that a width (angle) of a sensed beam may be consistent with or greater than a width (angle) of a beam that is actually used to transmit data. Due to different spatial domains, resources may actually overlap with each other.

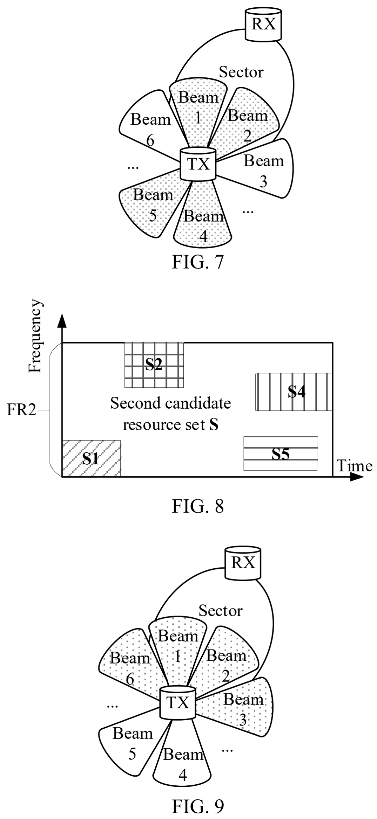

Exemplarily, as shown in FIG. 7 and FIG. 8, a position of TX (indicating a transmit end) and a position of RX (indicating a receive end) are used to indicate a position relationship between the first device and the second device. The position of TX is used to indicate a position of the first device, and the position of RX is used to indicate a position of the second device. In FIG. 7, beams included in the first beam direction are a beam 1 and a beam 2. When performing resource selection, the first device first needs to exclude, from the second candidate resource set S, occupied resource sets S1 and S2 that are sensed in directions of the beam 1 and the beam 2.

FIG. 7 shows only adjacent beams and reverse beams in the first beam direction. It may be understood that actually other beams may exist between a beam 3 and a beam 4 and other beams may exist between a beam 5 and a beam 6. Herein, adjacent beams refer to two beams with adjacent positions. For example, an adjacent beam of the beam 1 is the beam 6, and an adjacent beam of the beam 2 is the beam 3. Reverse beams refer to two beams with an angle of 180°. For example, a reverse beam of the beam 1 is the beam 4, and a reverse beam of the beam 2 is the beam 5.

### Example 2

When RSRP of a proximity beam (including an adjacent beam) corresponding to the first beam direction is greater than a threshold, a resource occupied by a proximity beam of a sector is excluded.

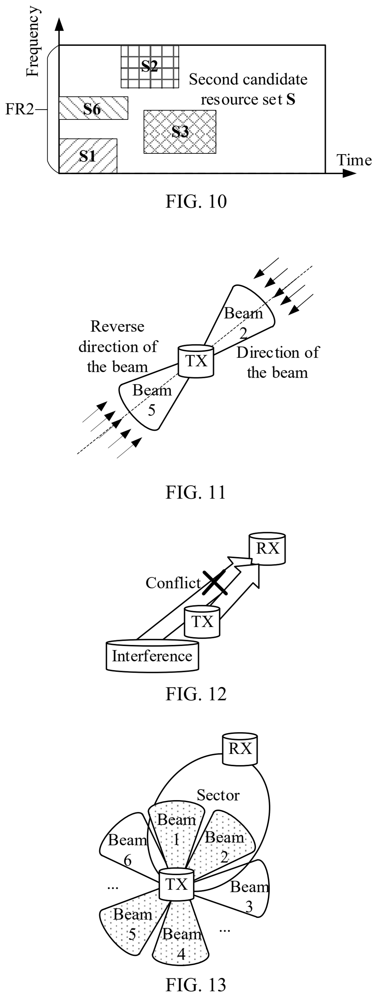

As shown in FIG. 9 and FIG. 10, to reduce interference and resource conflicts between proximity beam resources, resources of a beam 6 and a beam 3 that are adjacent to a beam 1 and a beam 2 that are covered by a sector are excluded. A second candidate resource set S subjected to the exclusion is shown in FIG. 10.

### Example 3

When RSRP of a reverse beam is greater than a threshold, a resource occupied by a reverse beam of a sector is excluded.

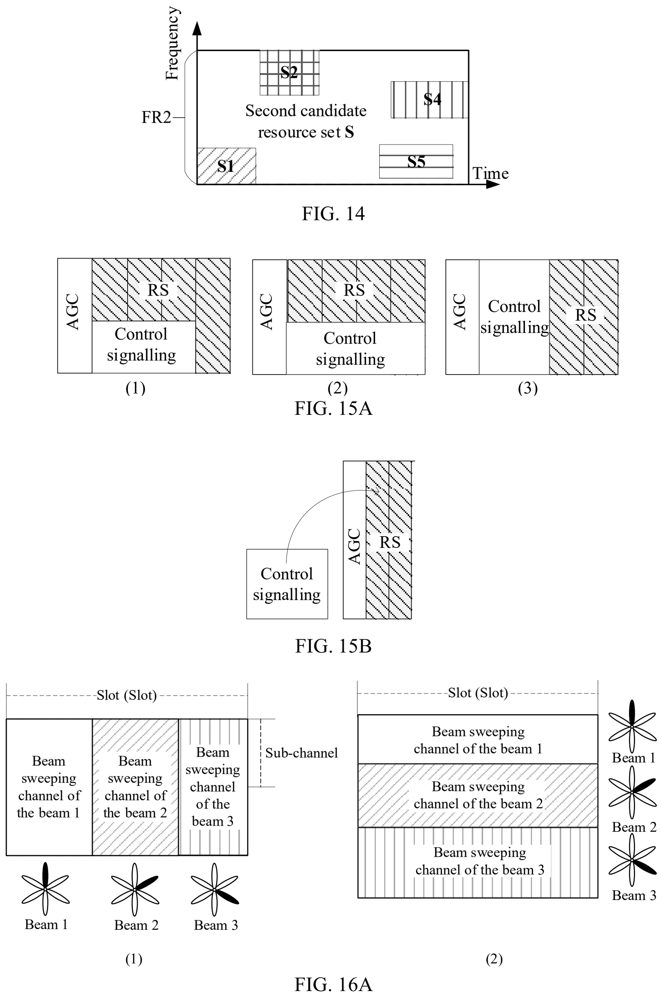

To reduce interference and resource conflicts between reverse beam resources, FIG. 11 and FIG. 12 show a definition of a reverse beam and a possible conflict. Resource exclusion of a reverse beam enables a TX UE (the first device) to exclude a transmission resource of a receive UE (the second device) in a zone in a transmission direction. As shown in FIG. 11 to FIG. 14, resources of a beam 4 and a beam 5 that are reverse to a beam 1 and a beam 2 that are covered by a sector are excluded. A second candidate resource set S subjected to the exclusion is shown in FIG. 14.

By using the foregoing resource selection method, a sidelink device that operates in a time-frequency beam domain in the FR2 frequency band may perform resource selection and transmission.

Optionally, the beam sweeping channel includes at least control signalling and/or a reference signal (Reference Signal, RS).

Herein, the control signalling may be carried by a PSCCH or 2nd-stage sidelink control information (2nd-stage Sidelink Control Information, 2nd-stage SCI).

In an optional embodiment, a physical layer structure of the beam sweeping channel in the present application may meet at least one of the following features.

As shown in FIG. 15A, the control signalling and the RS may be multiplexed in a manner of frequency division multiplexing (Frequency Division Multiplexing, FDM), a manner of time division multiplexing (Time Division Multiplexing, TDM), or a manner of combining TDM and FDM.

Different columns of reference signals in FIG. 15A and FIG. 15B may represent different beam directions.

A guard period (guard period, GP) may be reserved after an end time domain symbol of the beam sweeping channel and that of the control channel. The guard period may be an orthogonal frequency division multiplexing (Orthogonal Frequency Division Multiplexing, OFDM) symbol.

A time domain length of the beam sweeping channel may be one slot or an OFDM symbol with a fixed pattern (pattern).

A quantity of time domain symbols, a position of a time domain start symbol, a quantity of PRBs or sub-channels occupied in frequency domain, and start positions of the PRBs or sub-channels in frequency domain that are of a beam reference signal are indicated by control signalling (for example, a PSCCH or a PSCCH and 2nd SCI).

In some optional embodiments, the control signalling includes at least one of the following:
beam indication information;
data transmission scheduling information;
a source ID (Source ID);
a destination ID (Destination ID);
a zone ID (Zone ID);
beam priority information;
a format and time-frequency information of 2nd-stage sidelink control information 2^{nd} SCI;
a modulation and coding manner;
a modulation and coding scheme (Modulation and coding scheme, MCS) table indication;
hybrid automatic repeat request (Hybrid Automatic Repeat reQuest, HARQ) related information; or
a reserved bit (Reserve bit).

It should be noted that the data transmission scheduling information herein may be used to schedule the transmission of the first channel, and the control signalling may be used to schedule the corresponding first channel across slots.

It should be noted that physical sidelink broadcast channel PSBCH signalling in an S-SSB includes beam indication information.

Optionally, the beam indication information includes at least one of the following:
time domain position information of the RS;
frequency domain configuration information of the RS;
a port of the RS;
a sequence of the RS;
beam index information, where the beam index information herein may be specifically indicated by a reference signal port indicator field, or may be indicated by a reference signal sequence, or may be indicated by a combination of a port and a sequence;
a beam power threshold, used to indicate a power benchmark of an optimal beam (good beam), where only a beam that is measured by the second device and that has a beam power higher than the beam power threshold may be used for transmission;
an azimuth sweeping limitation of a beam (which may specifically include a start azimuth and an end azimuth that have been determined to be swept); or
a downtilt sweeping limitation of a beam (which may specifically include a start downtilt and an end downtilt that have been determined to be swept).

The time domain position information of the RS includes at least one of the following:
time domain pattern (pattern) information of the RS;
position information of a time domain start symbol of the RS; or
information about a quantity of time domain symbols of the RS.

The frequency domain configuration information of the RS includes at least one of the following:
frequency domain pattern information of the RS, such as a start resource RE, a comb size, a comb offset, a cyclic shift, or an orthogonal cover code (Orthogonal Cover Code, OCC);
position information of a frequency domain start physical resource block PRB of the RS;
position information of a frequency domain start sub-channel of the RS;
information about a quantity of PRBs and/or sub-channels occupied by the RS in frequency domain; or
frequency domain shift information of the RS (which may be specifically a quantity of PRBs that are shifted relative to a frequency domain reference point).

Optionally, the data transmission scheduling information includes at least one of the following:
data priority information;
frequency domain resource allocation information of a first channel;
time domain resource allocation information of a first channel;
a quantity (Gap slot number) of slots in a second time interval between a first channel and the beam sweeping channel;
a resource reservation period of a first channel;
a quantity of resource reservation periods of a first channel;
a quantity of demodulation reference signal (Demodulation Reference Signal, DMRS) ports;
a DMRS pattern;
a modulation and coding manner;
an MCS table indication;
a new data indication, used to distinguish between initial transmission and retransmission;
time-frequency resource configuration indication information used for retransmission;
a redundancy version; or
a HARQ process number.

The frequency domain resource allocation information of the first channel includes at least one of the following:
frequency domain pattern information of the first channel, such as a start resource RE, a comb size, a comb offset, a cyclic shift, or an orthogonal cover code OCC;
position information of a frequency domain start PRB of the first channel;
position information of a frequency domain start sub-channel of the first channel;
information about a quantity of PRBs occupied by the first channel in frequency domain;
information about a quantity of sub-channels of the first channel; or
frequency domain shift information of the first channel (which may be specifically a quantity of PRBs that are shifted relative to a frequency domain reference point).

The time domain resource allocation information of the first channel includes at least one of the following:
a slot position occupied by the first channel (which may specifically refer to a quantity of sub-channels and a quantity of slots, that is, Subframe Num and Slot Num);
time domain pattern information of the first channel;
position information of a time domain start symbol of the first channel;
information about a quantity of time domain symbols of the first channel; or
information about a time domain period of the first channel.

Optionally, the RS includes at least one of the following:
a beam measurement reference signal (beam measurement RS, BMRS);
a sidelink synchronization signal SLSS;
a channel state information reference signal CSI-RS; or
a demodulation reference signal DMRS.

In an optional embodiment of the present application, if a plurality of beam sweeping channels are included in one slot, mapping of beam sweeping channels of different beams in a single slot in a resource set meets at least one of the following:

TDM or FDM is performed on all the beam sweeping channels of the different beams; or
control signalling on the beam sweeping channels of the different beams occupies different sub-channels or PRB sets, FDM is used to separately schedule reference signals of respective beams, and TDM or FDM may be performed on reference signals of the different beams.

Exemplarily, in FIG. 16A, a frequency domain start position of the beam sweeping channel is a start PRB position of a sub-channel, and a quantity of PRBs or sub-channels occupied in frequency domain is configured or pre-configured by using a higher-layer parameter.

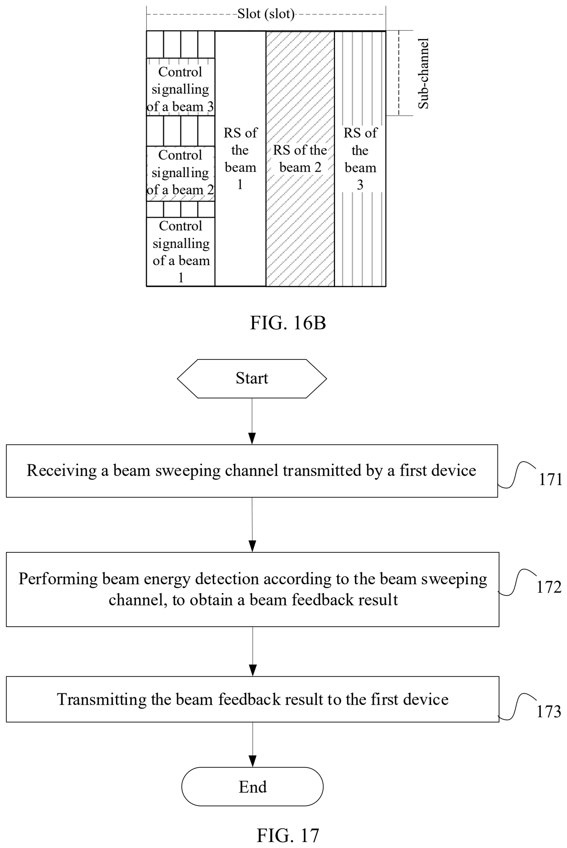

Exemplarily, in FIG. 16B, a frequency domain start position of the control signalling is a start PRB position of a sub-channel, a quantity of PRBs or sub-channels occupied in frequency domain is configured or pre-configured by using a higher-layer parameter, a time domain start position of the control signalling is configured or pre-configured by using a higher-layer parameter, and a quantity of time domain symbols is configured by using a higher-layer parameter.

A quantity of time domain symbols, a position of a time domain start symbol, a quantity of PRBs or sub-channels occupied in frequency domain, and start positions of the PRBs or sub-channels in frequency domain that are of a beam reference signal are indicated by the control signalling.

A time domain start position of the beam sweeping channel is configured or pre-configured by using a higher-layer parameter, and a quantity of time domain symbols is configured by using a higher-layer parameter.

Optionally, an entire slot may be divided into specific time domain patterns. For example, as shown in a left part of FIG. 16A, one slot is divided into three parts in time domain, where each of a first part and a second part always occupies five symbols, and a third part always occupies four symbols. When a device uses each resource, time domain configuration needs to follow this rule to perform resource selection.

In embodiments of the present application, a communication mechanism that supports sidelink millimeter wave communication is provided according to specific characteristics and features of a sidelink technology. By selecting a first transmission resource from a first candidate resource set, a beam sweeping channel may be transmitted to a second device on the first transmission resource, thereby implementing sidelink millimeter wave resource selection and implementing resource selection and data transmission on a time domain resource, a frequency domain resource, and a beam domain resource in an FR2.

### Second embodiment

As shown in FIG. 17, an embodiment of the present application provides a resource selection method, which is applied to a second device. The method includes the following steps 171 to 173.

In step 171, a beam sweeping channel transmitted by a first device is received.

The beam sweeping channel may include control signalling and/or a reference signal RS.

In this step, the second device may receive, based on configuration or pre-configuration information of a resource pool, the beam sweeping channel transmitted by the first device, to perform beam sweeping and beam pairing. Herein, the beam sweeping channel is a channel used for beam sweeping.

It should be noted that the beam sweeping channel may be a new channel, or may be a channel in a related technology (for example, may be a sidelink synchronization signal block S-SSB).

In step 172, beam power measurement is performed according to the beam sweeping channel, to obtain a beam report.

Herein, the beam power measurement may be performed based on RSRP of the reference signal, reference signal received quality (Reference Signal Received Quality, RSRQ), a signal-to-interference-plus-noise ratio (Signal to Interference plus Noise Ratio, SINR), a received signal strength indicator (Received Signal Strength Indication, RSSI), or CSI.

In step 173, the beam report is transmitted to the first device.

In this step, after performing the beam power measurement on the received reference signal, the second device may feed back a beam report of at least one beam with good measurement quality to the first device.

In embodiments of the present application, after the second device transmits the beam report obtained by performing beam power measurement according to the beam sweeping channel to the first device, the first device may establish a millimeter wave communications link with the second device based on the received beam sweeping feedback result transmitted by the second device, thereby implementing sidelink millimeter wave communication. In this way, in an environment in which a vehicle moves at a high speed, when a relative position of the vehicle constantly changes, a millimeter wave communications link can be quickly established by using the resource selection method in embodiments of the present application.

Optionally, the beam report includes at least a beam index and/or a beam power measurement result.

The beam index may include at least an index of an optimal beam and an index of a sub-optimal beam, and the beam power measurement result may include at least a measurement value of the optimal beam and a measurement value of the sub-optimal beam.

In a specific embodiment, the process of performing the beam power measurement according to the beam sweeping channel, to obtain the beam report includes:
performing the beam power measurement according to the beam sweeping channel, to obtain at least one beam power measurement result; and
using beam power measurement result among the at least one beam power measurement result that meets a first preset condition as the beam report,
where the beam power measurement result that meets the first preset condition includes at least one of the following:
   a beam power measurement result greater than or equal to a fourth threshold; or
   a beam power measurement result that is in the at least one beam power measurement result and that has a power magnitude meeting a second preset condition, where the power magnitude meeting the second preset condition includes first N power magnitudes in descending order or top X% of power magnitudes in descending order, and both N and X are positive numbers.

In embodiments of the present application, a beam power measurement result in which a beam measurement value is greater than the fourth threshold may be fed back to the first device, or beam reports with first N power magnitudes in descending order or top X% of power magnitudes in descending order may be selected from all measured beam measurement values and the selected beam reports are fed back to the first device.

In embodiments of the present application, after the second device transmits the beam report obtained by performing beam power measurement according to the beam sweeping channel to the first device, the first device may establish a millimeter wave communications link with the second device based on the received beam sweeping feedback result transmitted by the second device, thereby implementing sidelink millimeter wave communication. In this way, in an environment in which a vehicle moves at a high speed, when a relative position of the vehicle constantly changes, a millimeter wave communications link can be quickly established by using the resource selection method in embodiments of the present application.

### Third embodiment

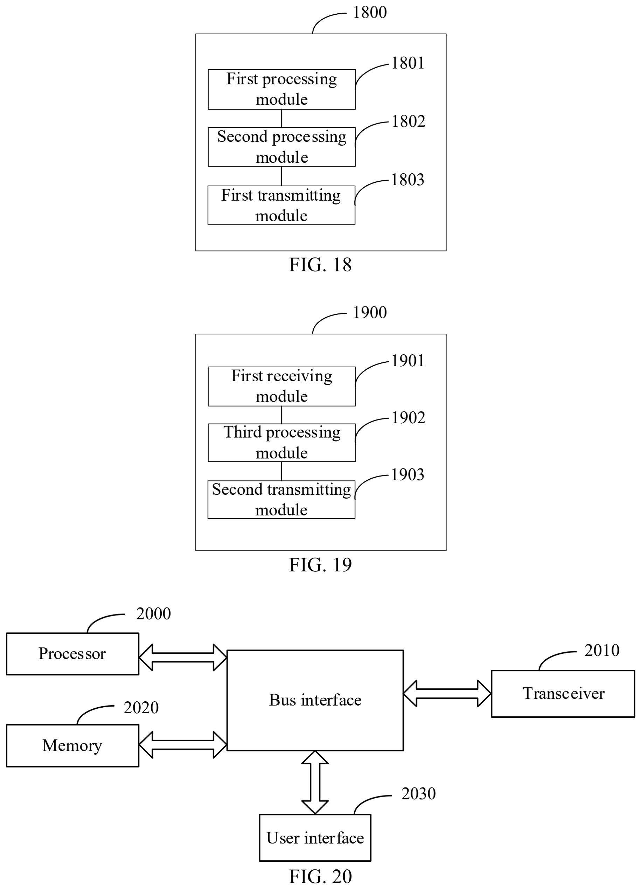

As shown in FIG. 18, an embodiment of the present application provides a resource selection apparatus 1800, applied to a first device. The apparatus includes: a first processing module 1801, a second processing module 1802 and a first transmitting module 1803.

The first processing module 1801 is configured to determine a first candidate resource set used for beam sweeping.

The second processing module 1802 is configured to select a first transmission resource from the first candidate resource set.

The first transmitting module 1803 is configured to transmit a beam sweeping channel to a second device on the first transmission resource.

In embodiments of the present application, a first device may determine a first candidate resource set used for beam sweeping, select a first transmission resource from the first candidate resource set, and then transmit a beam sweeping channel to a second device on the first transmission resource, to execute a beam sweeping process. In this way, fast beam sweeping and alignment on a sidelink can be implemented.

Optionally, the resource selection apparatus 1800 further includes:
a second receiving module, configured to receive a beam report transmitted by the second device according to the beam sweeping channel.

Optionally, a time difference between a first instant at which the first device transmits the beam sweeping channel and a second instant is less than or equal to a first time interval, and the second instant is an instant at which the first device receives the beam report transmitted by the second device.

Optionally, the second processing module 1802 includes: a first processing unit, a second processing unit and a third processing unit.

The first processing unit is configured to: perform resource exclusion on an omni-directional resource sensing result of control signalling on the beam sweeping channel, to obtain a resource exclusion result; and select the first transmission resource from the first candidate resource set according to the resource exclusion result.

The second processing unit is configured to randomly select a resource from the first candidate resource set as the first transmission resource.

The third processing unit is configured to select the first transmission resource from the first candidate resource set according to configuration information and/or indication information transmitted by a network.

Optionally, the resource selection apparatus 1800 further includes: a fourth processing module and a fifth processing module.

The fourth processing module is configured to determine a second candidate resource set used to transmit data.

The fifth processing module is configured to select, from the second candidate resource set, a second transmission resource for a first channel used to transmit data.

The fifth processing module includes: a fourth processing unit and a fifth processing unit.

The fourth processing unit is configured to select the second transmission resource for the first channel from the second candidate resource set according to an association relationship between the beam sweeping channel and the first channel.

The fifth processing unit is configured to select, according to information about a first beam direction corresponding to the second device, the second transmission resource for the first channel from resources obtained after a first resource is excluded from the second candidate resource set.

Optionally, the association relationship between the beam sweeping channel and the first channel includes at least one of the following:
there is a mapping relationship between the beam sweeping channel and the first channel in frequency domain;
the beam sweeping channel and the first channel meet a second time interval in time domain;
a quantity of physical resource blocks PRBs or sub-channels occupied by the first channel in frequency domain is indicated by the beam sweeping channel or is configured or pre-configured by using a higher-layer parameter; or
the first channel is transmitted after the transmission of the beam sweeping channel is completed.

Optionally, the fifth processing unit includes: a first processing subunit and a second processing subunit.

The first processing subunit is configured to acquire a beam direction according to prior position information between the first device and the second device, and use the beam direction as the first beam direction.

The second processing subunit is configured to: determine at least one target beam direction based on a beam report fed back by the second device, and select one of the at least one target beam direction as the first beam direction.

Optionally, the first resource includes at least one of the following:
a resource corresponding to the first beam direction in which a reference signal received power RSRP measurement value is higher than a first threshold value;
a resource corresponding to a second beam direction in which an RSRP measurement value is higher than a second threshold value, where the second beam direction includes at least a proximity beam direction of the first beam direction; or
a resource corresponding to a third beam direction in which an RSRP measurement value is higher than a third threshold value, where the third beam direction includes at least a reverse beam direction of the first beam direction.

Optionally, the beam sweeping channel includes at least control signalling and/or a reference signal RS.

Optionally, the control signalling includes at least one of the following:
beam indication information;
data transmission scheduling information;
a source ID;
a destination ID;
a zone ID;
beam priority information;
a format and time-frequency information of 2nd-stage sidelink control information 2^{nd} SCI;
a modulation and coding manner;
a modulation and coding scheme MCS table indication;
hybrid automatic repeat request HARQ related information; or
a reserved bit.

Optionally, the beam indication information includes at least one of the following:
time domain position information of the RS;
frequency domain configuration information of the RS;
a port of the RS;
a sequence of the RS;
beam index information;
a beam power threshold;
an azimuth sweeping limitation of a beam; or
a downtilt sweeping limitation of a beam.

Optionally, the data transmission scheduling information includes at least one of the following:
data priority information;
frequency domain resource allocation information of a first channel;
time domain resource allocation information of a first channel;
a quantity of slots in a second time interval between a first channel and the beam sweeping channel;
a resource reservation period of a first channel;
a quantity of resource reservation periods of a first channel;
a quantity of demodulation reference signal DMRS ports;
a DMRS pattern;
a modulation and coding manner;
an MCS table indication;
a new data indication;
time-frequency resource configuration indication information used for retransmission;
a redundancy version; or
a HARQ process number.

Optionally, the RS includes at least one of the following:
a beam measurement reference signal BMRS;
a sidelink synchronization signal SLSS;
a channel state information reference signal CSI-RS; or
a demodulation reference signal DMRS.

The third embodiment of the present application corresponds to the method in the first embodiment. All implementations in the first embodiment are applicable to embodiments of the resource selection apparatus, and same technical effects can be achieved.

### Fourth embodiment

As shown in FIG. 19, an embodiment of the present application provides a resource selection apparatus 1900, applied to a second device. The apparatus includes: a first receiving module 1901, a third processing module 1902 and a second transmitting module 1903.

The first receiving module 1901 is configured to receive a beam sweeping channel transmitted by a first device.

The third processing module 1902 is configured to perform beam power measurement according to the beam sweeping channel, to obtain a beam report.

The second transmitting module 1903 is configured to transmit the beam report to the first device.

In embodiments of the present application, after the second device transmits the beam report obtained by performing beam power measurement according to the beam sweeping channel to the first device, the first device may establish a millimeter wave communications link with the second device based on the received beam sweeping feedback result transmitted by the second device, thereby implementing sidelink millimeter wave communication. In this way, in an environment in which a vehicle moves at a high speed, when a relative position of the vehicle constantly changes, a millimeter wave communications link can be quickly established by using the resource selection method in embodiments of the present application.

Optionally, the beam sweeping channel includes control signalling and/or a reference signal RS.

Optionally, the beam report includes at least a beam index and/or a beam power measurement result.

Optionally, the third processing module 1902 includes: a sixth processing unit and a seventh processing unit.

The sixth processing unit is configured to perform the beam power measurement according to the beam sweeping channel, to obtain at least one beam power measurement result.

The seventh processing unit is configured to use at least one beam power measurement result that meets a first preset condition as the beam report.

The beam power measurement result that meets the first preset condition includes at least one of the following:
a beam power measurement result greater than or equal to a fourth threshold; or
a beam power measurement result that is in the at least one beam power measurement result and that has a power magnitude meeting a second preset condition, where the power magnitude meeting the second preset condition includes first N power magnitudes in descending order or top X% of power magnitudes in descending order, and both N and X are positive numbers.

The fourth embodiment of the present application corresponds to the method in the second embodiment. All implementations in the second embodiment are applicable to embodiments of the resource selection apparatus, and same technical effects can be achieved.

### Fifth embodiment

To better implement the foregoing objectives, as shown in FIG. 20, the fifth embodiment of the present application further provides a device. The device is a first device and includes:
a processor 2000, and a memory 2020 connected to the processor 2000 by using a bus interface. The memory 2020 is configured to store a program and data that are used when the processor 2000 executes operations, and the processor 2000 invokes and executes the program and the data that are stored in the memory 2020.

A transceiver 2010 is connected to the bus interface, and is configured to receive and transmit data under control of the processor 2000. The processor 2000 is configured to read a program in the memory 2020 and execute the following steps:
determining a first candidate resource set used for beam sweeping;
selecting a first transmission resource from the first candidate resource set; and
transmitting a beam sweeping channel to a second device on the first transmission resource.

In embodiments of the present application, a first device may determine a first candidate resource set used for beam sweeping, select a first transmission resource from the first candidate resource set, and then transmit a beam sweeping channel to a second device on the first transmission resource, to execute a beam sweeping process. In this way, fast beam sweeping and alignment on a sidelink can be implemented.

In FIG. 20, a bus architecture may include any quantity of interconnected buses and bridges, and specifically interconnect various circuits of one or more processors represented by the processor 2000 and a memory represented by the memory 2020. The bus architecture may further interconnect various other circuits such as a peripheral device, a voltage regulator, and a power management circuit. These are all well known in the art, and therefore are not further described in this specification. The bus interface provides an interface. The transceiver 2010 may be a plurality of components, that is, includes a transmitter and a transceiver; and provides units for communicating with various other apparatuses on a transmission medium. For different terminals, a user interface 2030 may alternatively be an interface capable of externally or internally connecting to a required device, and the connected device includes, but is not limited to, a keypad, a display, a speaker, a microphone, a joystick, and the like. The processor 2000 is responsible for management of the bus architecture and general processing, and the memory 2020 may store data for use by the processor 2000 when the processor 2000 executes operations.

Optionally, the processor 2000 is further configured to:
receive a beam report transmitted by the second device according to the beam sweeping channel.

Optionally, a time difference between a first instant at which the first device transmits the beam sweeping channel and a second instant is less than or equal to a first time interval, and the second instant is an instant at which the first device receives the beam report transmitted by the second device.

Optionally, for selecting the first transmission resource from the first candidate resource set, the processor 2000 is specifically configured to execute at least one of the following:
performing resource exclusion on an omni-directional resource sensing result of control signalling on the beam sweeping channel, to obtain a resource exclusion result, and selecting the first transmission resource from the first candidate resource set according to the resource exclusion result;
randomly selecting a resource from the first candidate resource set as the first transmission resource; or
selecting the first transmission resource from the first candidate resource set according to configuration information and/or indication information transmitted by a network.

Optionally, the processor 2000 is further configured to:
determine a second candidate resource set used to transmit data; and
select, from the second candidate resource set, a second transmission resource for a first channel used to transmit data.

A manner of selecting, from the second candidate resource set, the second transmission resource for the first channel includes at least one of the following:
selecting the second transmission resource for the first channel from the second candidate resource set according to an association relationship between the beam sweeping channel and the first channel; or
selecting, according to information about a first beam direction corresponding to the second device, the second transmission resource for the first channel from resources obtained after a first resource is excluded from the second candidate resource set.

Optionally, the association relationship between the beam sweeping channel and the first channel includes at least one of the following:
there is a mapping relationship between the beam sweeping channel and the first channel in frequency domain;
the beam sweeping channel and the first channel meet a second time interval in time domain;
a quantity of physical resource blocks PRBs or sub-channels occupied by the first channel in frequency domain is indicated by the beam sweeping channel or is configured or pre-configured by using a higher-layer parameter; or
the first channel is transmitted after the transmission of the beam sweeping channel is completed.

Optionally, a manner of determining the first beam direction includes at least one of the following:
acquiring a beam direction according to prior position information between the first device and the second device, and using the beam direction as the first beam direction; or
determining at least one target beam direction based on a beam report fed back by the second device, and selecting one of the at least one target beam direction as the first beam direction.

Optionally, the first resource includes at least one of the following:
a resource corresponding to the first beam direction in which a reference signal received power RSRP measurement value is higher than a first threshold value;
a resource corresponding to a second beam direction in which an RSRP measurement value is higher than a second threshold value, where the second beam direction includes at least a proximity beam direction of the first beam direction; or
a resource corresponding to a third beam direction in which an RSRP measurement value is higher than a third threshold value, where the third beam direction includes at least a reverse beam direction of the first beam direction.

Optionally, the beam sweeping channel includes at least control signalling and/or a reference signal RS.

Optionally, the control signalling includes at least one of the following:
beam indication information;
data transmission scheduling information;
a source ID;
a destination ID;
a zone ID;
beam priority information;
a format and time-frequency information of 2nd-stage sidelink control information 2^{nd} SCI;
a modulation and coding manner;
a modulation and coding scheme MCS table indication;
hybrid automatic repeat request HARQ related information; or
a reserved bit.

Optionally, the beam indication information includes at least one of the following:
time domain position information of the RS;
frequency domain configuration information of the RS;
a port of the RS;
a sequence of the RS;
beam index information;
a beam power threshold;
an azimuth sweeping limitation of a beam; or
a downtilt sweeping limitation of a beam.

Optionally, the data transmission scheduling information includes at least one of the following:
data priority information;
frequency domain resource allocation information of a first channel;
time domain resource allocation information of a first channel;
a quantity of slots in a second time interval between a first channel and the beam sweeping channel;
a resource reservation period of a first channel;
a quantity of resource reservation periods of a first channel;
a quantity of demodulation reference signal DMRS ports;
a DMRS pattern;
a modulation and coding manner;
an MCS table indication;
a new data indication;
time-frequency resource configuration indication information used for retransmission;
a redundancy version; or
a HARQ process number.

Optionally, the RS includes at least one of the following:
a beam measurement reference signal BMRS;
a sidelink synchronization signal SLSS;
a channel state information reference signal CSI-RS; or
a demodulation reference signal DMRS.

It should be noted herein that the foregoing device provided in embodiments of the present application can implement all method steps implemented in the foregoing resource selection method embodiment applied to a first device, and same technical effects can be achieved. Herein, a part and beneficial effects that are the same as those in the method embodiment are not described in detail.

### Sixth embodiment

To better implement the foregoing objectives, referring to the structure shown in FIG. 20, the sixth embodiment of the present application further provides a device, where the device is a second device and includes:
a processor, and a memory connected to the processor by using a bus interface. The memory is configured to store a program and data that are used when the processor executes operations, and the processor invokes and executes the program and the data that are stored in the memory.

A transceiver is connected to the bus interface, and is configured to receive and transmit data under control of the processor. The processor is configured to read a program in the memory and execute the following steps:
receiving a beam sweeping channel transmitted by a first device;
performing beam power measurement according to the beam sweeping channel, to obtain a beam report; and
transmitting the beam report to the first device.

In embodiments of the present application, after the second device transmits the beam report obtained by performing beam power measurement according to the beam sweeping channel to the first device, the first device may establish a millimeter wave communications link with the second device based on the received beam sweeping feedback result transmitted by the second device, thereby implementing sidelink millimeter wave communication. In this way, in an environment in which a vehicle moves at a high speed, when a relative position of the vehicle constantly changes, a millimeter wave communications link can be quickly established by using the resource selection method in embodiments of the present application.

In FIG. 20, a bus architecture may include any quantity of interconnected buses and bridges, and specifically interconnect various circuits of one or more processors represented by the processor and a memory represented by the memory. The bus architecture may further interconnect various other circuits such as a peripheral device, a voltage regulator, and a power management circuit. These are all well known in the art, and therefore are not further described in this specification. The bus interface provides an interface. The transceiver may be a plurality of components, that is, includes a transmitter and a transceiver; and provides units for communicating with various other apparatuses on a transmission medium. For different terminals, a user interface may alternatively be an interface capable of externally or internally connecting to a required device, and the connected device includes, but is not limited to, a keypad, a display, a speaker, a microphone, a joystick, and the like. The processor is responsible for management of the bus architecture and general processing, and the memory may store data for use by the processor when the processor executes operations.

Optionally, the beam sweeping channel includes control signalling and/or a reference signal RS.

Optionally, the beam report includes at least a beam index and/or a beam power measurement result.

Optionally, for performing the beam power measurement according to the beam sweeping channel to obtain the beam report, the processor is specifically configured to:
perform the beam power measurement according to the beam sweeping channel, to obtain at least one beam power measurement result; and
use at least one beam power measurement result that meets a first preset condition as the beam report.

The beam power measurement result that meets the first preset condition includes at least one of the following:
a beam power measurement result greater than or equal to a fourth threshold; or
a beam power measurement result that is in the at least one beam power measurement result and that has a power magnitude meeting a second preset condition, where the power magnitude meeting the second preset condition includes first N power magnitudes in descending order or top X% of power magnitudes in descending order, and both N and X are positive numbers.

It should be noted herein that the foregoing device provided in this embodiment of the present application can implement all method steps implemented in the foregoing resource selection method embodiment applied to a second device, and same technical effects can be achieved. Herein, a part and beneficial effects that are the same as those in the method embodiment are not described in detail.

A person skilled in the art may understand that all or some of the steps of the foregoing embodiments may be implemented by hardware, or may be implemented by a computer program indicating related hardware, and the computer program includes instructions for executing some or all of the steps of the foregoing methods. In addition, the computer program may be stored in a readable storage medium, and the storage medium may be any form of storage medium.

In addition, a specific embodiment of the present application further provides a computer-readable storage medium, on which a computer program is stored. When the program is executed by a processor, steps of the method in the first embodiment or steps of the method in second embodiment are implemented, and same technical effects can be achieved. To avoid repetition, details are not described herein again.

In addition, it should be noted that, in the apparatus and method of the present application, it is evident that each component or step may be decomposed and/or recombined. The decomposition and/or the recombination shall be considered equivalent solutions to the present application. In addition, the steps for executing the foregoing series of processing may be executed in a chronological order as described, but do not necessarily need to be executed in a chronological order, and some of the steps may be executed in parallel or independently of one another. A person of ordinary skill in the art can understand that all or any of the steps or components of the methods and apparatuses of the present application may be implemented in any computing apparatus (including a processor, a storage medium, or the like) or a network of a computing apparatus by using hardware, firmware, software, or a combination thereof, which can be implemented by a person of ordinary skill in the art by using their basic programming skills when reading the descriptions of the present application.

Therefore, the objectives of the present application may also be achieved by running a program or a group of programs on any computing apparatus. The computing apparatus may be a well-known general apparatus. Therefore, the objectives of the present application may also be achieved by providing only a program product including program code for implementing the methods or apparatuses. In other words, such a program product is also included in the present application, and a storage medium that stores such a program product is also included in the present application. Evidently, the storage medium may be any well-known storage medium or any storage medium developed in the future. It should also be noted that in the apparatuses and methods of the present application, it is evident that each component or step may be decomposed and/or recombined. The decomposition and/or the recombination shall be considered equivalent solutions to the present application. In addition, the steps for executing the foregoing series of processing may be executed in a chronological order as described, but do not necessarily need to be executed in a chronological order. Some of the steps may be executed in parallel or independently of one another.

The foregoing descriptions are optional implementations of the present application. It should only be noted that those of ordinary skill in the art may further make various improvements and modifications without departing from the principles of the present application, and these improvements and modifications also fall within the protection scope of the present application.

## Claims

1. A resource selection method, applied to a first device, wherein the method comprises:
determining a first candidate resource set used for beam sweeping;
selecting a first transmission resource from the first candidate resource set; and
transmitting a beam sweeping channel to a second device on the first transmission resource.

2. The method according to claim 1, wherein the method further comprises:
receiving a beam report transmitted by the second device according to the beam sweeping channel.

3. The method according to claim 2, wherein a time difference between a first instant at which the first device transmits the beam sweeping channel and a second instant is less than or equal to a first time interval, and the second instant is an instant at which the first device receives the beam report transmitted by the second device.

4. The method according to claim 1, wherein the selecting the first transmission resource from the first candidate resource set comprises at least one of following:
performing resource exclusion on an omni-directional resource sensing result of control signalling on the beam sweeping channel, to obtain a resource exclusion result, and selecting the first transmission resource from the first candidate resource set according to the resource exclusion result;
randomly selecting a resource from the first candidate resource set as the first transmission resource; or
selecting the first transmission resource from the first candidate resource set according to configuration information and/or indication information transmitted by a network.

5. The method according to claim 1, wherein the method further comprises:
determining a second candidate resource set used to transmit data; and
selecting, from the second candidate resource set, a second transmission resource for a first channel used to transmit data,
wherein the selecting, from the second candidate resource set, the second transmission resource for the first channel comprises at least one of following:
selecting the second transmission resource for the first channel from the second candidate resource set according to an association relationship between the beam sweeping channel and the first channel; or
selecting, according to information about a first beam direction corresponding to the second device, the second transmission resource for the first channel from resources obtained after a first resource is excluded from the second candidate resource set.

6. The method according to claim 5, wherein the association relationship between the beam sweeping channel and the first channel comprises at least one of following:
there is a mapping relationship between the beam sweeping channel and the first channel in frequency domain;
the beam sweeping channel and the first channel meet a second time interval in time domain;
a quantity of physical resource blocks PRBs or sub-channels occupied by the first channel in frequency domain is indicated by the beam sweeping channel or is configured or pre-configured by using a higher-layer parameter; or
the first channel is transmitted after the transmission of the beam sweeping channel is completed.

7. The method according to claim 5, wherein determining the first beam direction comprises at least one of following:
acquiring a beam direction according to prior position information between the first device and the second device, and using the beam direction as the first beam direction; or
determining at least one target beam direction based on a beam report fed back by the second device, and selecting one of the at least one target beam direction as the first beam direction.

8. The method according to claim 5, wherein the first resource comprises at least one of following:
a resource corresponding to the first beam direction in which a reference signal received power RSRP measurement value is higher than a first threshold value;
a resource corresponding to a second beam direction in which an RSRP measurement value is higher than a second threshold value, wherein the second beam direction comprises at least a proximity beam direction of the first beam direction; or
a resource corresponding to a third beam direction in which an RSRP measurement value is higher than a third threshold value, wherein the third beam direction comprises at least a reverse beam direction of the first beam direction.

9. The method according to claim 1, wherein the beam sweeping channel comprises at least control signalling and/or a reference signal RS.

10. The method according to claim 9, wherein the control signalling comprises at least one of following:
beam indication information;
data transmission scheduling information;
a source ID;
a destination ID;
a zone ID;
beam priority information;
a format and time-frequency information of 2nd-stage sidelink control information 2^{nd} SCI;
a modulation and coding manner;
a modulation and coding scheme MCS table indication;
hybrid automatic repeat request HARQ related information; or
a reserved bit.

11. The method according to claim 10, wherein the beam indication information comprises at least one of following:
time domain position information of the RS;
frequency domain configuration information of the RS;
a port of the RS;
a sequence of the RS;
beam index information;
a beam power threshold;
an azimuth sweeping limitation of a beam; or
a downtilt sweeping limitation of a beam.

12. The method according to claim 10, wherein the data transmission scheduling information comprises at least one of following:
data priority information;
frequency domain resource allocation information of a first channel;
time domain resource allocation information of a first channel;
a quantity of slots in a second time interval between a first channel and the beam sweeping channel;
a resource reservation period of a first channel;
a quantity of resource reservation periods of a first channel;
a quantity of demodulation reference signal DMRS ports;
a DMRS pattern;
a modulation and coding manner;
an MCS table indication;
a new data indication;
time-frequency resource configuration indication information used for retransmission;
a redundancy version; or
a HARQ process number.

13. The method according to claim 9, wherein the RS comprises at least one of following:
a beam measurement reference signal BMRS;
a sidelink synchronization signal SLSS;
a channel state information reference signal CSI-RS; or
a demodulation reference signal DMRS.

14. A resource selection method, applied to a second device, wherein the method comprises:
receiving a beam sweeping channel transmitted by a first device;
performing beam power measurement according to the beam sweeping channel, to obtain a beam report; and
transmitting the beam report to the first device.

15. The method according to claim 14, wherein the beam sweeping channel comprises control signalling and/or a reference signal RS.

16. The method according to claim 14, wherein the beam report comprises at least a beam index and/or a beam power measurement result.

17. The method according to claim 14, wherein the performing the beam power measurement according to the beam sweeping channel, to obtain the beam report comprises:
performing the beam power measurement according to the beam sweeping channel, to obtain at least one beam power measurement result; and
using at least one beam power measurement result that meets a first preset condition as the beam report,
wherein the beam power measurement result that meets the first preset condition comprises at least one of following:
a beam power measurement result greater than or equal to a fourth threshold; or
a beam power measurement result that is in the at least one beam power measurement result and that has a power magnitude meeting a second preset condition, wherein the power magnitude meeting the second preset condition comprises first N power magnitudes in descending order or top X% of power magnitudes in descending order, and both N and X are positive numbers.

18. A resource selection apparatus, applied to a first device, wherein the resource selection apparatus comprises:
a first processing module, configured to determine a first candidate resource set used for beam sweeping;
a second processing module, configured to select a first transmission resource from the first candidate resource set; and
a first transmitting module, configured to transmit a beam sweeping channel to a second device on the first transmission resource.

19. A resource selection apparatus, applied to a second device, wherein the resource selection apparatus comprises:
a first receiving module, configured to receive a beam sweeping channel transmitted by a first device;
a third processing module, configured to perform beam power measurement according to the beam sweeping channel, to obtain a beam report; and
a second transmitting module, configured to transmit the beam report to the first device.

20. A device, comprising a transceiver, a memory, a processor, and a computer program stored in the memory and runnable on the processor, wherein when the processor executes the computer program, the resource selection method according to any one of claims 1 to 13 is implemented, or the resource selection method according to any one of claims 14 to 17 is implemented.

21. A computer-readable storage medium storing a computer program, wherein when the computer program is executed by a processor, the resource selection method according to any one of claims 1 to 13 is implemented, or the resource selection method according to any one of claims 14 to 17 is implemented.
